# FASCICULE DE BREVET EUROPEEN

(11) **EP 3 687 078 B1**
(45) Date de publication et mention de la délivrance du brevet: **04.10.2023**
(21) Numéro de dépôt: 20152996.3
(22) Date de dépôt: 21.01.2020
(51) Int. Cl.: H04B 5/00

(54) **COMMUNICATION NFC**
NFC-KOMMUNIKATION
NFC COMMUNICATION

(30) Priorité: 25.01.2019 FR 1900667
(43) Date de publication de la demande: 29.07.2020
(73) Titulaire: PROTON WORLD INTERNATIONAL N.V., 1831 Diegem (BE)
(72) Inventeur: AHSSINI, Youssef, 1800 VILVOORDE (BE); RESTIAU, Guy, 1367 RAMILLIES, BRABANT WALLON (BE)
(74) Mandataire: Cabinet Beaumont

(56) Documents cités:
- US-A1- 2016 072 556
- US-B2- 9 271 300

## Description

### Domaine technique

La présente description concerne de façon générale les communications sans fil entre deux dispositifs électroniques, par exemple un terminal et un transpondeur. La description s'applique plus particulièrement à un procédé de communication sans fil.

### Technique antérieure

Les communications sans fil sont de plus en plus utilisées de nos jours pour différentes applications telles que des échanges d'informations, des paiements bancaires, etc. Il existe plusieurs types de communication sans fil, par exemple les communications en champ proche (Near Field Communication, NFC), les communications utilisant des hautes fréquences à plus longue distance comme les communications Bluetooth, etc.

Il serait souhaitable de pouvoir améliorer au moins en partie certains aspects des communications en champ proche connues, et plus particulièrement certains aspects des procédés connus de communication sans fil entre deux dispositifs électroniques.

Le document US 2016/0072556 concerne une modulation de la charge adaptative basée sur une contreréaction pour un dispositif de communication en champ proche (NFC) (Feedback-based adaptive load modulation (ALM) for a near field communication (NFC) device).

Le document US 9 271 300 B2 décrit un procédé de communication en champ proche entre un transpondeur et un terminal, comprenant une étape de comptage d'un nombre de signaux d'erreur émis par le terminal.

### Résumé de l'invention

L'invention concerne un procédé de communication en champ proche entre un transpondeur et un terminal, selon la revendication indépendante 1.

L'invention concerne également un transpondeur selon la revendication indépendante 5.

D'autres modes de réalisation de l'invention sont décrits dans les revendications dépendantes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre, très schématiquement, une communication sans fil entre un terminal et un transpondeur ;
la figure 2 représente un organigramme illustrant un exemple de mise en oeuvre d'un échange de signaux entre un terminal et un transpondeur ;
la figure 3 représente un organigramme illustrant un exemple de mise en oeuvre d'un autre échange de signaux entre un terminal et un transpondeur ; et
la figure 4 représente un organigramme illustrant un mode de mise en oeuvre d'une partie d'un procédé de communication sans fil, côté transpondeur.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement détaillé d'un terminal ou d'un transpondeur ne sera pas détaillé par la suite.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les technologies de communication en champ proche (NFC - Near Field Communication) permettent de réaliser des communications à haute fréquence et à courte portée. De tels systèmes exploitent un champ électromagnétique radiofréquence émis par un dispositif (terminal ou lecteur) pour communiquer avec un autre dispositif (transpondeur ou carte).

Dans les systèmes récents, un même dispositif NFC peut opérer en mode carte ou en mode lecteur (par exemple dans le cas d'une communication en champ proche entre deux téléphones mobiles). Il est alors fréquent que les dispositifs soient alimentés par batteries et que leurs fonctions et circuits soient mis en veille pour ne pas consommer d'énergie entre des périodes d'utilisation. Les dispositifs doivent alors être « réveillés » quand ils se trouvent à portée l'un de l'autre.

On suppose le cas de deux dispositifs électroniques (ou dispositifs NFC), par exemple un terminal, ou lecteur, et un transpondeur, mais tout ce qui va être décrit s'applique plus généralement à tout système dans lequel un transpondeur capte un champ électromagnétique rayonné par un lecteur, borne ou terminal.

Selon les applications, pour une communication, un des dispositifs fonctionne en mode dit lecteur tandis que l'autre fonctionne en mode dit carte, ou les deux dispositifs communiquent en mode poste à poste (peer to peer - P2P). Chaque dispositif comporte divers circuits électroniques de génération d'un signal radiofréquence (RF) émis à l'aide d'une antenne d'un circuit oscillant/résonant. Le champ radiofréquence généré par l'un des dispositifs est capté par l'autre dispositif qui se trouve à portée et qui comporte également une antenne. Dans certaines applications, lorsqu'un dispositif n'est pas en cours de communication, il est commuté en mode veille afin de réduire l'énergie consommée. Cela est en particulier le cas pour les dispositifs alimentés par batterie. Lorsqu'un premier dispositif NFC émet un champ électromagnétique pour initier une communication avec un deuxième dispositif NFC, ce champ est capté par ce deuxième dispositif dès qu'il se trouve à portée. Ce champ est détecté par les circuits du deuxième dispositif qui, s'ils sont en veille, sont réactivés. Cela se traduit par une variation de la charge constituée par les circuits du deuxième dispositif sur le circuit résonant de génération du champ du premier dispositif. En pratique, la variation correspondante de phase ou d'amplitude du champ émis est détectée par le premier dispositif qui entame alors un protocole de communication NFC avec le deuxième dispositif. Côté premier dispositif, on détecte en pratique si l'amplitude de la tension aux bornes du circuit résonant descend en dessous d'un seuil ou si la tension aux bornes du circuit résonant présente un déphasage supérieur à un seuil. Une fois que le premier dispositif a détecté la présence du deuxième dispositif dans son champ, il entame une procédure d'établissement de communication, mettant en oeuvre des émissions de requêtes par le premier dispositif et de réponses par le deuxième dispositif.

On fera par la suite référence à une carte à puce, mais les modes de réalisation décrits s'appliquent plus généralement à tout transpondeur actif, c'est-à-dire tout dispositif de communication utilisant un champ électromagnétique radiofréquence généré par un terminal pour communiquer, sans contact, avec ce dernier.

Un inconvénient des communications sans fil, et, plus particulièrement, des communications en champ proche, est qu'elles sont particulièrement sensibles à des perturbations extérieures qui peuvent être assimilées à des signaux parasites. Ces perturbations peuvent être dues à l'environnement dans lequel a lieu la communication sans fil, à des dispositifs parasites, ou encore aux dispositifs eux-mêmes qui essaient d'entrer en communication.

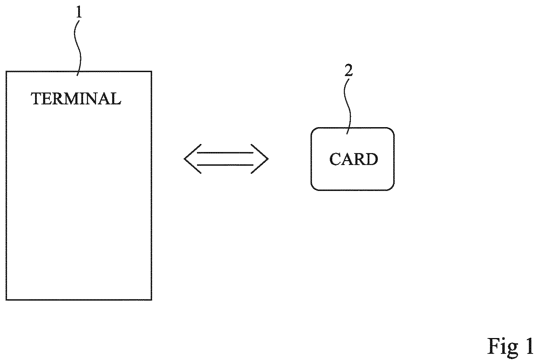

La figure 1 représente schématiquement une communication sans fil entre deux dispositifs électroniques : un terminal, ou lecteur, 1 (TERMINAL) et un transpondeur 2 (CARD) .

Le terminal 1 est un dispositif électronique qui peut être, par exemple, fixe ou mobile. C'est le terminal 1 qui est en charge d'amorcer la communication. A titre d'exemple, le terminal 1 est un terminal de paiement ou un téléphone mobile.

Le transpondeur 2 est un dispositif généralement mobile. Selon un mode de réalisation préféré, le transpondeur 2 est une carte à microcircuits (ou carte à puce), par exemple une carte bancaire ou une carte de transport. Par la suite, on appellera carte le transpondeur 2. A titre de variante, le transpondeur 2 pourrait être un téléphone mobile. La carte 2 comprend différents circuits électroniques adaptés à mettre en oeuvre diverses commandes envoyées par le terminal 1, comme par exemple des circuits d'authentification, des circuits de cryptographie, etc. En particulier, ces différents circuits consomment plus ou moins d'énergie pendant l'exécution d'une commande envoyée par le terminal 1. La carte 2 peut comprendre plusieurs modes d'alimentation différents dans lesquels certains circuits sont alimentés en énergie tandis que d'autres ne le sont pas. Plus particulièrement, la carte 2 comprend au moins un mode de plus basse consommation en énergie, ou mode basse consommation, dans lequel certains circuits ne sont pas alimentés en énergie, et/ou présentent une diminution de leurs fréquences d'horloge.

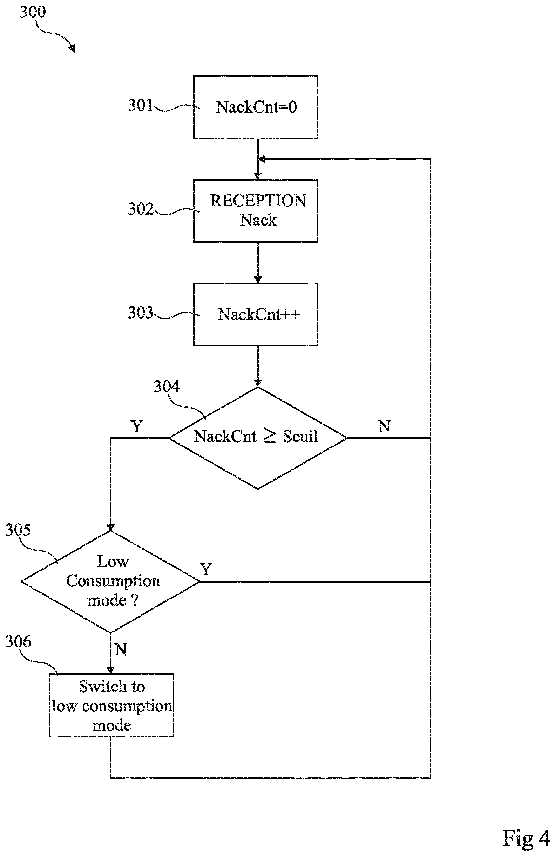

Selon un mode de réalisation, le transpondeur 2 est équipé d'un compteur NackCnt s'incrémentant à chaque réception d'un message d'erreur émis par le terminal 1. Plus particulièrement, ce message d'erreur est un signal, ou message, du terminal 1 signifiant une erreur concernant un signal de réponse de la carte 2. Le fonctionnement et l'utilisation de ce compteur seront détaillés en relation avec la figure 4.

La communication sans fil entre le terminal 1 et la carte 2 est, par exemple, une communication de type communication en champ proche (NFC). Dans ce type de communication, la carte 2 est positionnée à portée du terminal 1 afin de pouvoir capter le champ électromagnétique du terminal 1. A titre d'exemple, la carte 2 est positionnée à une distance généralement inférieure à 10 cm du terminal 1. Selon un autre exemple, la carte 2 est en contact mécanique avec le terminal 1.

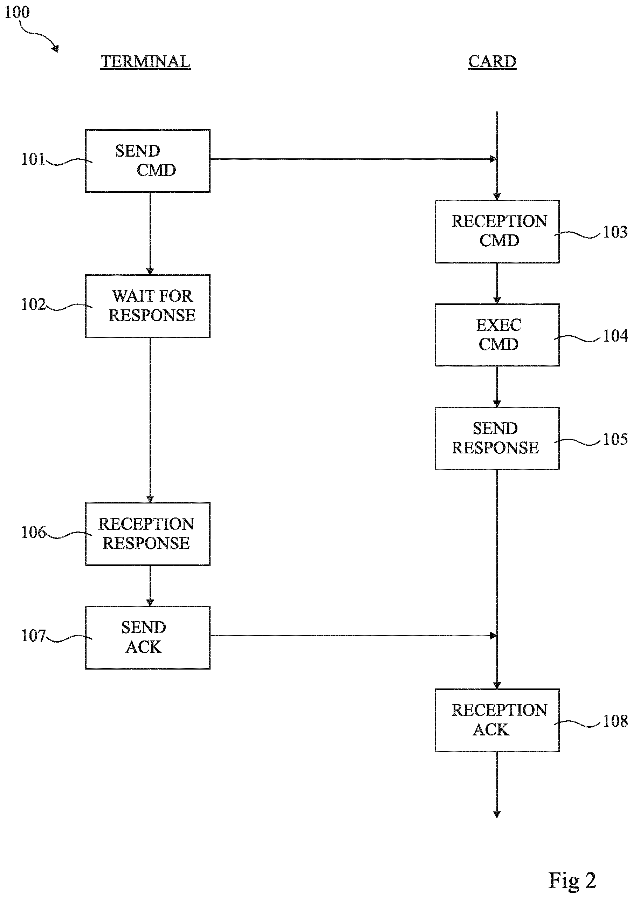

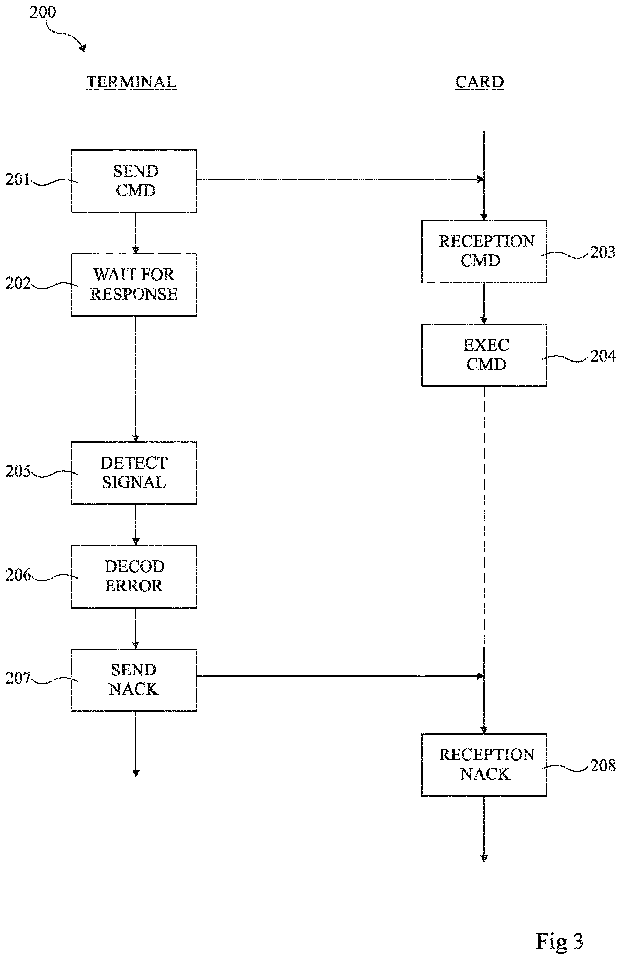

Une communication sans fil entre le terminal 1 et la carte 2 commence par une phase de synchronisation, comprenant, par exemple, un procédé d'identification, un procédé usuel d'anticollision, etc. Le terminal 1 et la carte 2 échangent, ensuite, des signaux de commande et de réponse. Des exemples d'échanges de signaux de commande et de réponse entre le terminal 1 et la carte 2 seront détaillés en relation avec les figures 2 et 3. La figure 2 illustre un exemple d'échange de signaux se déroulant sans erreur. La figure 3 illustre un exemple d'échange de signaux dans lequel une erreur survient.

La figure 2 illustre, schématiquement et sous forme de blocs, un exemple de mise en oeuvre d'un échange 100 de signaux de commande et de réponse entre le terminal 1 et la carte 2.

Comme indiqué précédemment, une communication entre le terminal 1 et la carte 2 débute par une phase de synchronisation. L'échange de signaux illustré par la figure 2 est un exemple d'échange se déroulant une fois la phase de synchronisation terminée.

L'échange de signaux 100 débute par un envoi, par le terminal 1, d'un signal de commande (bloc 101, SEND CMD) à la carte 2. Le signal de commande comprend des instructions à l'intention de la carte 2, par exemple une demande d'envoi de donnée, une demande d'exécution d'un code par la carte 2, etc. Une fois le signal envoyé, le terminal 1 bascule dans un état d'attente de réponse de la carte 2 (bloc 102, WAIT FOR RESPONSE). Le prochain signal que le terminal 1 détectera sera considéré comme un signal de réponse provenant de la carte 2.

La carte 2 reçoit le signal RF du terminal 1. La carte 2 décode ensuite ce signal et l'assimile à un signal de commande provenant du terminal 1 (bloc 103, RECEPTION CMD) . La carte 2 met ensuite en oeuvre la commande reçue (bloc 104, EXEC CMD). Pour exécuter la commande, la carte 2 peut faire appel à plusieurs des différents circuits dont elle dispose.

Une fois la commande exécutée, la carte envoie un signal de réponse au terminal 1 (bloc 105, SEND RESPONSE). Le signal de réponse peut être un signal de réponse automatique à la fin de l'exécution de la commande ou être un signal de réponse comprenant une ou plusieurs informations destinées au terminal 1. Le signal de réponse de la carte 2 prend la forme d'une modulation de la charge que représentent ses circuits sur le champ électromagnétique généré par le terminal 1 (rétro-modulation).

Le terminal 1 détecte cette variation de charge du champ électromagnétique (bloc 106, RECEPTION RESPONSE). Le terminal 1 décode ensuite ce signal et vérifie qu'il s'agit bien d'un signal de réponse provenant de la carte 2. Si ce signal est bien un signal de réponse, un signal d'accusé de réception (appelé par la suite accusé de réception) est alors automatiquement envoyé, par le terminal 1, à la carte 2 (bloc 107, SEND ACK).

La carte 2 détecte ce signal (bloc 108, RECEPTION ACK) et le décode comme un accusé de réception venant du terminal 1. La réception d'un accusé de réception par la carte 2 indique que la communication a abouti sans erreur.

La figure 3 illustre, schématiquement et sous forme de blocs, un autre exemple de mise en oeuvre d'un échange 200 de signaux de commande et de réponse entre le terminal 1 et la carte 2.

Comme indiqué précédemment, une communication entre le terminal 1 et la carte 2 débute par une phase de synchronisation. L'échange de signaux illustré par la figure 2 est un exemple d'échange se déroulant une fois la phase de synchronisation terminée.

L'échange de signaux 200 débute par un envoi, par le terminal 1, d'un signal de commande (bloc 201, SEND CMD) à la carte 2. Le signal de commande comprend des instructions à l'intention de la carte 2, par exemple une demande d'envoi de donnée, une demande d'exécution d'un code par la carte 2, etc. Une fois le signal envoyé, le terminal 1 bascule dans un état d'attente de réponse de la carte 2 (bloc 202, WAIT FOR RESPONSE). Le prochain signal que le terminal 1 détectera sera considéré comme un signal de réponse provenant de la carte 2.

La carte 2 reçoit le signal RF du terminal 1. La carte 2 décode ensuite ce signal et l'assimile à un signal de commande provenant du terminal 1 (bloc 203, RECEPTION CMD) . La carte 2 met ensuite en oeuvre la commande reçue (bloc 204, EXEC CMD). Pour exécuter la commande, la carte 2 peut faire appel à plusieurs des différents circuits dont elle dispose. Certains de ces circuits, de par leur forte consommation par exemple, peuvent modifier le champ électromagnétique du terminal 1. Une telle modification du champ électromagnétique peut être assimilée, par le terminal 1, à l'émission d'un signal parasite par la carte 2.

Le terminal 1 peut détecter la modification du champ électromagnétique pendant l'exécution de la commande par la carte 2 (bloc 205, DETECT SIGNAL). Ce signal étant un signal parasite, il n'est pas formaté pour être décodé par le terminal 1. Le terminal 1 ne peut donc pas l'assimiler à un signal de réponse de la carte 2 (bloc 206, DECOD ERROR). Dans ce cas, le terminal 1 envoie, à la carte 2, un signal indiquant une erreur concernant le signal de réponse (bloc 207, SEND NACK), ou un signal indiquant une absence de réponse reçue.

La carte 2 détecte un signal (bloc 208, RECEPTION NACK) et le décode comme un signal indiquant une erreur concernant le signal de réponse au signal de commande. Le traitement, selon un mode de réalisation, de la réception de ce signal par la carte 2 sera détaillé en relation avec la figure 4.

On a décrit un signal parasite comme provenant d'un circuit de la carte 2 utilisé pour mettre en oeuvre une commande envoyée par le terminal 1, mais, en pratique, le signal parasite peut provenir d'un circuit de la carte 2 qui est activé pendant l'exécution de la commande mais qui n'est pas utilisé à cet effet, ou plus généralement de tout élément perturbant le champ.

La figure 4 est un organigramme illustrant un mode de mise en oeuvre d'une partie 300 d'un procédé de communication sans fil entre le terminal 1 et la carte 2. Plus particulièrement, la figure 4 illustre le traitement, par la carte 2, de la réception d'un signal indiquant une erreur concernant le signal de réponse de la carte 2. La figure 4 illustre en outre l'utilisation du compteur NackCnt.

Le compteur NackCnt est initialisé à zéro au début de chaque nouvelle communication entre le terminal 1 et la carte 2 (bloc 301, NackCnt=0). A titre d'exemple, ce compteur NackCnt peut être initialisé pendant la phase de synchronisation précédant l'échange de signaux entre le terminal 1 et la carte 2. Le compteur NackCnt est par exemple mis en oeuvre par un registre contenant une valeur, binaire ou autre, ou un mot binaire représentant la valeur du compteur.

Le compteur NackCnt a pour objectif de compter, côté carte, le nombre de signaux indiquant une erreur concernant un signal de réponse reçu par la carte 2 pendant une communication avec le terminal 1. En d'autres termes, à chaque fois que la carte 2 reçoit un signal indiquant une erreur concernant le signal de réponse (bloc 302, Réception Nack), le compteur NackCnt est incrémenté (bloc 303, NackCnt ++).

La valeur du compteur NackCnt est ensuite comparée à un seuil Nseuil (bloc 304, NackCnt≥Nseuil). Selon un mode de réalisation, le seuil Nseuil est par exemple compris entre 1 et 20, de préférence compris entre 2 et 6, par exemple égal à 4.

Si la valeur du compteur NackCnt est inférieure au seuil Nseuil (sortie N du bloc 304), l'échange de signaux entre le terminal 1 et la carte 2 peut continuer (retour au bloc 302). A titre d'exemple, le terminal 1 peut par exemple envoyer à nouveau le même signal de commande à la carte 2, ou envoyer un nouveau signal de commande à la carte 2, ou mettre fin à la communication avec la carte 2, etc.

Si la valeur du compteur NackCnt est supérieure ou égale au seuil Nseuil (sortie Y du bloc 304), cela indique que la carte a atteint le nombre seuil d'erreurs admis par le procédé de communication. Le seuil Nseuil est défini à la conception.

Une fois ce seuil atteint ou dépassé, la carte vérifie son mode d'alimentation (bloc 305, Low Consumption mode ?). Plus particulièrement, la carte 2 vérifie si son mode d'alimentation est un mode d'alimentation pleine puissance ou un mode d'alimentation basse consommation.

Si le mode d'alimentation de la carte 2 est un mode d'alimentation pleine puissance (sortie N du bloc 305), le mode d'alimentation de la carte 2 commute vers un mode basse consommation (bloc 306, Switch to low consumption mode). Plus particulièrement, les circuits de la carte 2 consommant beaucoup d'énergie, et n'étant pas utiles à l'exécution de la commande reçue, sont désactivés. Un mode basse consommation peut ainsi permettre de réduire les perturbations du champ électromagnétique de la carte 2. A titre d'exemple, la carte 2 peut désactiver un processeur de cryptographie, ou encore réduire ses fréquences d'horloge. L'échange de signaux entre le terminal 1 et la carte 2 peut continuer (retour au bloc 302) .

Si le mode d'alimentation de la carte 2 est déjà un mode basse consommation (sortie Y du bloc 306), alors la carte 2 reste en mode basse consommation. L'échange de signaux entre le terminal 1 et la carte 2 peut continuer (retour au bloc 302).

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données cidessus.

## Revendications

1. Procédé de communication en champ proche entre un transpondeur (2) et un terminal (1) comprenant une étape (303) de comptage, mise en oeuvre par le transpondeur (2), d'un nombre de signaux d'erreur émis par le terminal (1), le nombre de signaux indiquant une erreur de réception d'un signal est comparé à un seuil (Nseuil), **caractérisé en ce que** si le nombre de signaux indiquant une erreur de réception d'un signal est supérieur au seuil (Nseuil), le transpondeur (2) est commuté dans un mode de plus basse consommation énergétique, le mode basse consommation en énergie étant un mode dans lequel des circuits prédéfinis du transpondeur (2) ne sont plus alimentés en énergie.

2. Procédé selon la revendication 1, dans lequel les signaux d'erreur indiquent une erreur de réception par le terminal d'un signal provenant du transpondeur.

3. Procédé selon la revendication 1 ou 2, dans lequel le transpondeur est une carte à microcircuit.

4. Procédé selon l'une quelconque des revendications 1 à 3, dans lequel les signaux d'erreur émis par le terminal (1) sont des signaux d'erreur de décodage.

5. Transpondeur adapté à mettre en oeuvre le procédé selon l'une quelconque des revendications 1 à 4.

## Patentansprüche

1. Verfahren zur drahtlosen Nahfeldkommunikation zwischen einem Transponder (2) und einem Endgerät (1), aufweisend einen vom Transponder (2) ausgeführten Schritt (303) des Zählens einer Anzahl von durch das Endgerät (1) gesendeten Fehlersignalen, wobei die Anzahl der Signale, die einen Empfangsfehler eines Signals anzeigen, mit einem Schwellenwert (Nseuil) verglichen wird,
**dadurch gekennzeichnet, dass**
wenn die Anzahl der Signale, die einen Empfangsfehler eines Signals anzeigen, höher ist als der Schwellenwert (Nseuil), der Transponder (2) in einen Modus mit geringerem Energieverbrauch geschaltet wird, wobei der Modus mit geringem Energieverbrauch ein Modus ist, bei dem vordefinierte Schaltungen des Transponders (2) nicht mehr mit Strom versorgt werden.

2. Verfahren nach Anspruch 1, wobei die Fehlersignale einen Fehler beim Empfang eines Signals des Transponders durch das Endgerät anzeigen.

3. Verfahren nach Anspruch 1 oder 2, wobei der Transponder eine Mikroschaltkreiskarte ist.

4. Verfahren nach einem der Ansprüche 1 bis 3, wobei die vom Terminal (1) übertragenen Fehlersignale Dekodierfehlersignale sind.

5. Transponder, geeignet zur Durchführung des Verfahrens nach einem der Ansprüche 1 bis 4.

## Claims

1. Method of near-field wireless communication between a transponder (2) and a terminal (1) comprising a step (303), implemented by the transponder (2), of counting a number of error signals transmitted by the terminal (1), the number of signals indicating a reception error of a signal being compared with a threshold (Nseuil),
**characterised in that**
if the number of signals indicating a signal reception error is higher than the threshold (Nseuil), the transponder (2) is switched to a lower power consumption mode, the low power consumption mode being a mode wherein predefined circuits of the transponder (2) are no longer power supplied.

2. Method according to claim 1, wherein the error signals indicate an error in the reception by the terminal of a signal from the transponder.

3. Method according to claim 1 or 2, wherein the transponder is a microcircuit card.

4. Method according to any of claims 1 to 3, wherein the error signals transmitted by the terminal (1) are decoding error signals.

5. Transponder suitable to implement the method according to any one of claims 1 to 4.
